# EUROPEAN PATENT APPLICATION

(11) **EP 2 131 560 A1**
(43) Date of publication of application: **09.12.2009**
(21) Application number: 09003335.8
(22) Date of filing: 06.03.2009
(51) Int. Cl.: H04M 1/02

(54) **Communication terminal apparatus, information processing apparatus**

(30) Priority: 05.06.2008 JP 2008147712
(71) Applicant: Kabushiki Kaisha Toshiba, Minato-ku, Tokyo 105-8001 (JP)
(72) Inventor: Satoh, Mitsuhiro, Minato-ku Tokyo 105-8001 (JP); Iwasaki, Hiroyuki, Minato-ku Tokyo 105-8001 (JP)
(74) Representative: HOFFMANN EITLE

(57) **Abstract**

A communication terminal apparatus includes a body for constituting a first state and a second state; a ringtone output unit configured to output a ringtone if an incoming call is received and notifying the incoming call; a detection unit configured to detect that the body changes from the first state to the second state if the ringtone is output by the ringtone output unit at the time the body is placed in the first state; and a ringtone silencing unit configured to silence the ringtone if the change is detected by the detection unit.

## Description

### BACKGROUND OF THE INVENTION

### 1. Field of the Invention

The present invention relates to a communication terminal apparatus and an information processing apparatus, and more particularly to a communication terminal apparatus and an information processing apparatus for preferably notifying an incoming call of a voice communication.

### 2. Related rt

A communication terminal apparatus and an information processing apparatus such as a mobile phone and the like having a communication function outputs a ringtone from a speaker when a voice communication, an electronic mail, and the like are received to notify a user of it. For example, when a voice communication is received, a ringtone is continuously output until a user executes a predetermined operation such as depression of a response key and the like.

Conventionally, there is known a communication terminal apparatus which can stop a ringtone or reduce its volume by executing a predetermined operation when an unexpected ringtone is output in a place such as an electric car, a library, and the like in which it is required to keep a silent state (refer to, for example, Japanese Unexamined Patent Application Publication No. HEI 8-172468). The communication terminal apparatus can greatly reduce inconvenience applied to persons in the vicinity of the apparatus by stopping a ringtone by depressing a predetermined operation key even when the ringtone is output.

The communication terminal apparatus disclosed in Japanese Unexamined Patent Application Publication No. HEI 8-172468 can stop a ringtone or reduce its volume by depressing an operation key. However, it is assumed that a user becomes confused when an unexpected ringtone is output, and thus it is difficult for the user to perform a predetermined operation with allowance. Furthermore, it is difficult to accurately depress one of a plurality of operation keys to which a ringtone stop operation is allocated.

Further, when an operation key, which is different from a predetermined operation key to which the ringtone stop operation is allocated, is erroneously depressed, an incoming call may be shut off or denied or is responded contrary to an intention.

### SUMMARY OF THE INVENTION

The present invention has been accomplished in view of the above circumstances, and an object of the present invention is to provide a communication terminal apparatus and an information processing apparatus which silences an unexpected sound outputting by an easy operation.

This and other object can be achieved according to present invention by providing a information processing apparatus is **characterized in that** it has a body for constituting a first state and a second state; a sound output unit configured to output a sound; a detection unit configured to detect that the body changes from the first state to the second state if the sound is output by the sound output unit at the time the body is placed in the first state; and a sound silencing unit configured to silence the sound if the change is detected by the detection unit.

The communication terminal apparatus according to the present invention in **characterized in that** it has a ringtone output unit configured to output a ringtone if an incoming call is received and notifying the incoming call; a ringtone silencing unit configured to silence the ringtone output by the ringtone output unit; and a vibration generation unit configured to notify the incoming call by vibration if the ringtone is silenced by the ringtone silencing unit.

Further, the communication terminal apparatus according to the present invention in **characterized in that** it has a ringtone output unit configured to output a ringtone if an incoming call is received and notifying the incoming call; a ringtone silencing unit configured to silence the ringtone output by the ringtone output unit; and a volume adjustment accepting unit configured to accept a volume adjustment of the ringtone if the ringtone is output by the ringtone output unit and accepting a volume adjustment of a received voice if the ringtone is silenced by the ringtone silencing unit.

An information processing apparatus and a communication terminal apparatus according to the present invention can silences an unexpected sound outputting by an easy operation.

### BRIEF DESCRIPTION OF THE DRAWINGS

Figs. 1A and 1B are outside appearances of a folding-type mobile phone as an example of an information processing apparatus (a communication terminal apparatus) according to the present invention;
Figs. 2A and 2B are other outside appearances of the folding-type mobile phone as the example of the communication terminal apparatus according to the present invention;
Fig. 3 is a block diagram showing an internal arrangement of the mobile phone of the embodiment; and
Fig. 4 is a flowchart of a ringtone control process executed by the mobile phone of the embodiment.

### DETAILED DESCRIPTION OF THE PREFERRED EMBODIMENTS

An embodiment of a communication terminal apparatus according to the present invention will be described based on accompanying drawings.

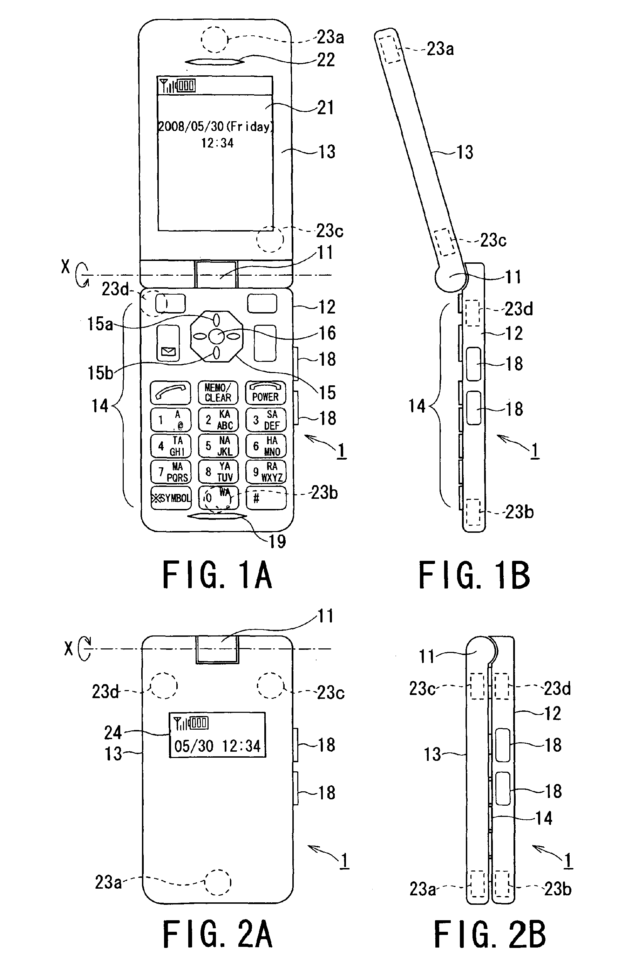

Figs. 1A and 1B are outside appearances of a folding-type mobile phone as an example of the communication terminal apparatus according to the present invention. Fig. 1A shows an arrangement of an outside appearance of the mobile phone 1 in a state that first and second bodies 12 and 13 are opened about 180° when viewed from a front surface, and Fig. 1B shows an arrangement of the outside appearance of the mobile phone 1 shown in Fig. 1A when viewed from a side surface. Further, the state of the mobile phone 1 in which the first and second bodies 12 and 13 shown in Fig. 1A and 1B are opened, is called a second state.

As shown in Figs. 1A and 1B, the first and second bodies 12 and 13 of the mobile phone 1 are coupled with each other through a hinge unit 11, which is located at a center and acts as a boundary there between, so that they can be folded in the direction of an arrow X through the hinge unit. A transmission/reception antenna is disposed to a predetermined position inside of the mobile phone 1, and the mobile phone 1 transmits and receives a radio wave between it and a base station (not shown) through the built-in antenna.

The first body 12 has operation keys 14 disposed on a surface thereof. The operation keys 14 have a cross key 15, a center key 16, character input keys, and the like.

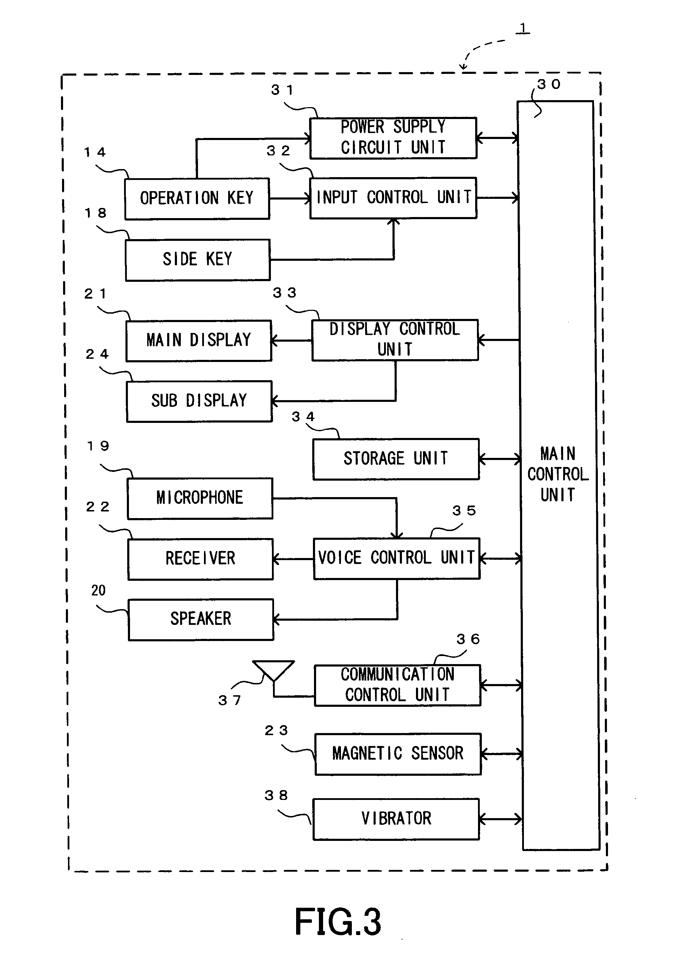

The cross key 15 and the center key 16 are disposed to an upper portion of the first body 12. The cross key 15 has four keys in up, down, right, and left directions, and a cursor displayed on a main display 21 can be moved in the up, down, right, and left directions by operating them in the up, down, right, and left directions. Specifically, there are executed various operations such as a scroll operation of a cursor position on a character input screen displayed on the main display 21 disposed to the second body 13, a phone number directory list, and an electronic mail, a page turning operation of a simple home page, an image feed operation, and the like. In the embodiment, an upper key 15a and a lower key 15b of the cross key 15 in upper and lower directions act as a volume adjustment accepting unit configured to accept a volume adjustment of the ringtone output from a speaker 20 (refer to Fig. 3) and accepting the volume adjustment of the received voice output from a receiver 22 in a voice communication.

Further, the center key 16 can fix various functions by depressing it. When, for example, a desired phone number is selected from a plurality of phone numbers of the phone number directory list displayed on the main display 21 in response to an operation of the cross key 15 executed by the user and the center key 16 is depressed in an internal direction of the first body 12, a call process is executed to the selected phone number.

The first body 12 has side keys 18 disposed thereto which operates the mobile phone 1. Predetermined processes are allocated to the side keys 18, respectively and executed by depressing the side keys 18 in the internal direction of the first body 12 when the mobile phone 1 is in an open state and in a closed state.

The first body 12 has a microphone 19 disposed below the operation keys 14, and the microphone 19 collects the voice of the user in communication.

Note that the first body 12 has a not shown battery pack inserted on a back surface side, and when a ring-off/power supply key is turned on, power is supplied from the battery pack to respective circuit units, thereby the mobile phone 1 is started up and placed in an operatable state.

In contrast, the second body 13 has the main display 21 disposed on a front surface. The main display 21 is a display composed of a LCD (Liquid Crystal Display), an organic EL (ElectroLuminescence) display, an inorganic EL display, an SED (Surface-conduction Electron-emitter Display) , and the like.

The main display 21 displays contents of an electronic mail, a simple home page, contents received from an external contents server (not shown), and the like in addition to a radio wave receiving state, a battery remaining amount, opponent names and phone numbers registered as a telephone directory, a transmission history, and the like.

The receiver (phone receiver) 22 is disposed to a predetermined position in an upper portion of the main display 21, and the user can make a voice communication through the receiver 22. Note that the speaker 20 is also disposed to a predetermined position of the mobile phone 1 as a voice output unit other than the receiver 22.

Magnetic sensors 23a, 23b, 23c, and 23d (magnetic sensor 23) are disposed to predetermined positions inside of the first and second bodies 12 and 13 to detect a state of the body of the mobile phone 1.

Figs. 2A and 2B are other outside appearances of the folding-type mobile phone as the example of the communication terminal apparatus according to the present invention. Fig. 2A shows an arrangement of the outside appearance viewed from the front surface when the mobile phone 1 is in the closed state, and Fig. 2B shows an arrangement of the outside appearance viewed from the side surface of the mobile phone 1 shown in Fig. 2A. The mobile phone 1 of Figs. 2A and 2B are in the closed state in which it is pivoted in the direction of an arrow X from the state of the mobile phone 1 of Figs. 1A and 1B. Further, a state of the mobile phone 1 in which the first and second bodies 12 and 13 shown in Fig. 2A and 2B are closed, is called a first state.

The second body 13 has a subdisplay 24 which is disposed thereto and composed of, for example, a LCD to display an antenna pict that shows a present sensitivity level of the antenna, a battery pict that shows a battery remaining amount of the mobile phone 1, a present time, and the like.

Fig. 3 is a block diagram showing an internal arrangement of the mobile phone of the embodiment.

The mobile phone 1 is composed a main control unit 30, a power supply circuit unit 31, an input control unit 32, a display control unit 33, a storage unit 34, a voice control unit 35, a communication control unit 36, the magnetic sensor 23, and a vibrator 38 which are connected to each other through a bus so that a communication can be carried out therethrough.

The main control unit 30 has a CPU (Central Processing Unit). The CPU integrally controls the mobile phone 1 by creating various control signals and supplying them to the respective units. The CPU executes an input control process to an input accepted from, for example, the operation keys 14 and the like and other various calculation processes, control processes, and the like.

The power supply circuit unit 31 switches the ON/OFF states of a power supply (battery and the like) based on, for example, the input accepted from the operation keys 14 operated by the user, and when the power supply is turned on, the power supply circuit unit 31 places the mobile phone 1 in the operable state by supplying power from the power supply to the respective units.

The input control unit 32 has an input interface to the operation keys 14 and the side keys 18. When the input control unit 32 detects that the operation keys 14 and the side keys 18 are depressed, it creates signals showing the depressed operation keys 14 and side keys 18 and transmits the signals to the main control unit 30.

The display control unit 33 has a display interface to the main display 21 and the subdisplay 24 and displays display information including a document, an image, and the like on the main display 21 and the subdisplay 24 under the control of the main control unit 30.

The storage unit 34 is composed of a ROM and a hard disc for storing a processing program of a process executed by the main control unit 30 and data necessary to the process, and the like, a nonvolatile memory, a RAM for temporarily storing data used when the main control unit 30 executes the process, and the like. The storage unit 34 stores various applications such as an electronic mail function and the like executed by the CPU of the main control unit 30 and various data groups.

The voice control unit 35 creates an analog voice signal from the voice collected by the microphone 19 under the control of the main control unit 30 and converts the analog voice signal into a digital voice signal. When the voice control unit 35 obtains the digital voice signal, it converts the digital voice signal into an analog voice signal under the control of the main control unit 30 and outputs it from the receiver 22 as a voice. Further, the voice control unit 35 controls a voice and a sound output from the speaker 20. In the embodiment, the voice control unit 35 acts as a sound (ringtone) output unit configured to output a notification sound such as a ringtone and the like from the speaker 20 and notifying an incoming call and the like and as a sound (ringtone) silencing unit configured to silence a notification sound such as a ringtone and the like.

The communication control unit 36 restores data by subjecting a received signal received from the base station (not shown) through an antenna 37 to a spectrum de-spreading process under the control of the main control unit 30. The data is transmitted to the voice control unit 35 in response to an instruction of the main control unit 30 and output from the receiver 22, transmitted to the display control unit 33 and displayed on the main display 21, or recorded to the storage unit 34. Further, when the communication control unit 36 obtains voice data collected by the microphone 19, data input through the operation keys 14, and data stored to the storage unit 34 under the control of the main control unit 30, it subjects these data to the speeded spectrum process and transmits these data to the base station through the antenna 37.

The magnetic sensor 23 detects a state of the mobile phone 1 and supplies it to the main control unit 30. Specifically, the magnetic sensor 23 detects whether a state which is arranged by the body of the mobile phone 1 is the open state or the closed state. In the embodiment, the magnetic sensor 23 acts as a detection unit configured to detect that the first and second bodies 12 and 13 of the mobile phone 1 change from the closed state to the open state.

The vibrator 38 generates vibration under the control of the main control unit 30. In the embodiment, the vibrator 38 acts as a vibration generating unit configured to notify an incoming call by vibration when a ringtone is silenced.

Next, a ringtone control process executed by the mobile phone 1 in the embodiment will be explained. When the mobile phone 1 receives a voice communication, the ringtone control process is started under the control of the main control unit 30.

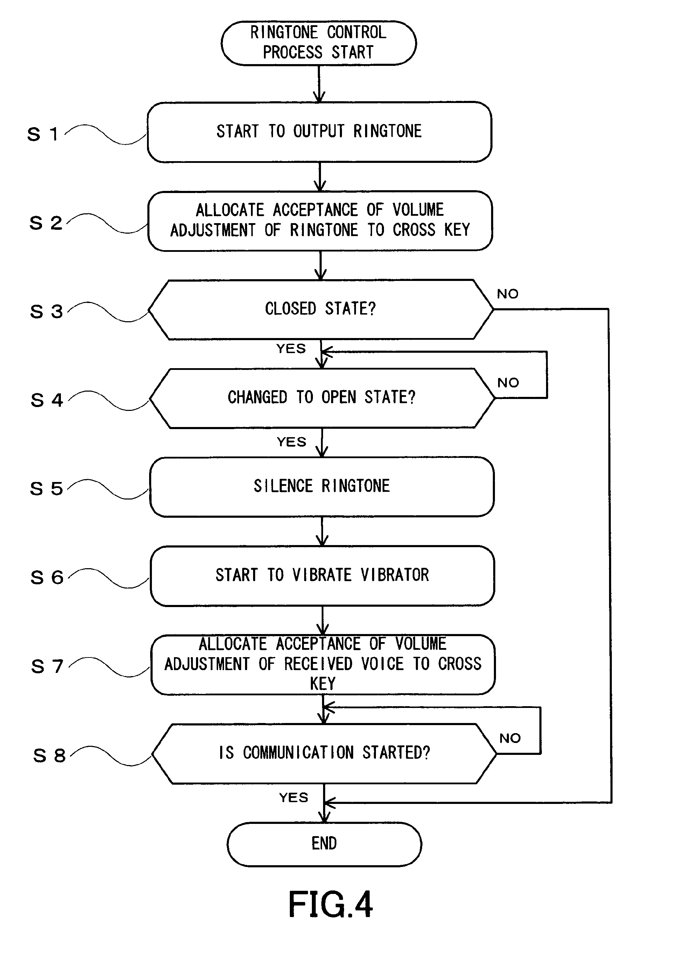

Fig. 4 is a flowchart of the ringtone control process executed by the mobile phone of the embodiment.

At step S1, the main control unit 30 causes the voice control unit 35 to start to output a ringtone. The voice control unit 35 starts to output a predetermined ringtone from the speaker 20. The user recognizes that there is an incoming call by that the ringtone is output.

At step S2, the main control unit 30 allocates acceptance of the volume adjustment of the ringtone output from the speaker 20 to a predetermined operation key 14. The main control unit 30 allocates acceptance of a process for increasing the volume of a ringtone to, for example, the upper key 15a of the cross key 15 and allocates acceptance of a process for reducing the volume of a ringtone to the lower key 15b thereof. Further, when the upper key 15a or the lower key 15b is depressed while a ringtone is output, the main control unit 30 causes the voice control unit 35 to execute a ringtone volume adjustment process based on the input.

At step S3, the main control unit 30 determines whether or not the body of the mobile phone 1 is closed. The main control unit 30 determines it based on the state of the mobile phone 1 detected by the magnetic sensor 23. When the main control unit 30 determines that the state of the mobile phone 1 detected by the magnetic sensor 23 is the open state, it finishes the ringtone control process.

In contrast, when the main control unit 30 determines that the body of the mobile phone 1 is in the close state, it determines at step S4 whether the mobile phone 1 changes from the closed state to the open state. The main control unit 30 determines it based on the state of the mobile phone 1 detected by the magnetic sensor 23. When the main control unit 30 determines that the state of the mobile phone 1 detected the magnetic sensor 23 is still the closed state, it waits for the process until the state of the mobile phone 1 is changed to the open state.

In contrast, when the main control unit 30 determines that the state of the mobile phone 1 detected by the magnetic sensor 23 changes from the closed state to the open state, it causes the voice control unit 35 to silence a ringtone at step S5. The voice control unit 35 silences the ringtone output from the speaker 20.

At step S6, the main control unit 30 causes the vibrator 38 to start vibration. That is, the main control unit 30 notifies the user that an incoming call is received by vibration in place of the ringtone. At the time, the main control unit 30 prevents generation of a vibration sound larger than necessary by starting vibration which is weaker than that generated ordinarily.

At step S7, the main control unit 30 allocates acceptance of the volume adjustment of a received voice output from the receiver 22 after a communication starts in place of the acceptance of the volume adjustment of the ringtone to the operation key 14 to which the acceptance of the volume adjustment of the ringtone is allocated at the ringtone adjustment allocation step S2. The main control unit 30 allocates acceptance of the process for increasing the volume of a received voice to, for example, the upper key 15a of the cross key 5 and allocates acceptance of the process for reducing the volume of a received voice to the lower key 15b thereof. Further, when the upper key 15a or the lower key 15b is depressed when the ringtone is output, the main control unit 30 causes the voice control unit 35 to execute a volume adjustment process of the volume of a received voice after an accepted communication starts.

At step S8, the main control unit 30 determines whether or not the communication starts. The main control unit 30 determines it depending on whether or not a key of the operation keys 14 and the side keys 18 to which acceptance of a communication start process is allocated is depressed. When the main control unit 30 determines that the communication is not yet started, it waits for the process until the communication is started. In contrast, when the main control unit 30 determines that the communication is started, it causes the vibrator 38 to stop vibration and causes the respective units to start a communication process. With the above operation, the ringtone control process is finished.

According to the mobile phone 1, even when an unexpected ringtone is output in a place such as an electric car, a library, and the like in which it is required to keep a silent state, the ringtone can be silenced promptly by a simple operation. That is, since it is assumed that the user becomes confused when the unexpected ringtone is output, it can be said that it is difficult for the user to execute a predetermined operation with allowance. The mobile phone 1 of the embodiment can silence the ringtone even in the above state by the simple operation of changing the mobile phone 1 from the closed state to the open state.

Further, since the user is aware of an incoming call after the ringtone is silenced, vibration larger than necessary is not generated by generating vibration which is weaker than that generated ordinarily, thereby persons in the vicinity of the mobile phone are prevented from feeling inconvenience.

Further, since the persons in the vicinity of the mobile phone 1 are not caused to feel inconvenience by an output of a ringtone after the ringtone is silenced by the simple operation, the user can confirm a caller and can determine whether or not a response is necessary with allowance.

Further, since the key to which the acceptance of the volume adjustment of a ringtone is allocated is not necessary after the ringtone is silenced, acceptance of the sound adjustment of a received voice can be allocated to the key in place of the above acceptance. With this operation, the user can previously adjust the volume of a received voice according to a peripheral environment and a communication opponent. When, for example, it is previously known that the volume of a voice of a caller is large and it is desired to take leakage of communication contents to the periphery into consideration, the mobile phone 1 is effective in that the volume of a received voice can be adjusted before a communication starts.

Note that although the embodiment is explained by applying the ringtone control process of a voice communication thereto, it is not limited thereto and may be arranged such that when a sound, which notifies that an unexpected mail is received, and an alarm sound are output, these sounds and the like are silenced by a simple change of state of the mobile phone 1.

Further, although the embodiment is explained as to the example in which the present invention is applied to the mobile phone which the body is a folding-type body, the embodiment is not limited to the example and the present invention may be applied to mobile phone which the body is a slide type body and straight type body.

When, for example, the present invention is applied to the slide type mobile phone, a state in which a first body and a second body constituting the mobile phone are approximately overlapped can be applied to the closed state and a state in which they are extended can be applied to the open state.

Further, when the present invention is applied to the straight type mobile phone, the present invention can be realized by providing an acceleration sensor in place of the magnetic sensor 23. At the time, the first state of the body of the mobile phone is set as a state that the value of acceleration of the body is equal to or less than a predetermined value, and the second state thereof is set as a state that the value of acceleration of the body is larger than the predetermined value. The main control unit 30 silences a ringtone when the user applies acceleration of a predetermined value or more to the mobile phone (the body) at the time the ringtone is output and the acceleration sensor detects that the first state changes to the second state.

Further, although the embodiment is explained by applying the communication terminal apparatus and an information processing apparatus according to the present invention to the mobile phone 1, the present invention can be also applied to PDA (Personal Digital Assistant), mobile type game equipment, mobile music reproduction equipment, mobile motion picture reproduction equipment, and other communication terminal apparatus having a function for outputting a sound such as ringtone, an information processing apparatus and the like.

The series of the processes explained in the embodiment may be executed by hardware.

Further, although the embodiment shows an example of the process in which the steps of the flowchart are time-sequentially executed in the described sequences, they are not necessarily executed time-sequentially and may be executed in parallel with each other or may be individually executed.

## Claims

1. An information processing apparatus comprising:
a body for constituting a first state and a second state;
a sound output unit configured to output a sound;
a detection unit configured to detect that the body changes from the first state to the second state if the sound is output by the sound output unit at the time the body is placed in the first state; and
a sound silencing unit configured to silence the sound if the change is detected by the detection unit.

2. The information processing apparatus according to claim 1 further comprising a vibration generation unit configured to generate vibration if the sound is silenced by the sound silencing unit.

3. The information processing apparatus according to claim 2, wherein the vibration generation unit generates vibration weaker than vibration generated ordinarily.

4. The information processing apparatus according to claim 3, wherein:
the information processing apparatus is a communication terminal apparatus receiving an incoming call;
the sound is a ringtone; and
the sound output unit outputs the ringtone if the incoming call is received and notifies the incoming call.

5. The information processing apparatus according to claim 4 further comprising a volume adjustment accepting unit configured to accept a volume adjustment the ringtone if the ringtone is output by the sound output unit and accepting a volume adjust of a received voice if the ringtone is silenced by the sound silencing unit.

6. The information processing apparatus according to claim 4, wherein:
the body comprises a first body and a second body;
the first state of the body is a state in which the first body and the second body are in a closed state; and
the second state of the body is a state in which the first body and the second body are in an open state.

7. The information processing apparatus according to claim 6, wherein the body is a folding-type body or slide type body.

8. The information processing apparatus according to claim 4, further comprising an acceleration detection unit configured to detect an acceleration of the body,
wherein the first state of the body is a state in which the value of acceleration of the body detected by the acceleration detection unit is equal to or less than a predetermined value, and the second state of the body is a state in which the value of acceleration of the body acceleration detection unit is larger than the predetermined value.

9. The information processing apparatus according to claim 8, wherein the body is a straight type body.

10. A communication terminal apparatus comprising:
a ringtone output unit configured to output a ringtone if an incoming call is received and notifying the incoming call;
a ringtone silencing unit configured to silence the ringtone output by the ringtone output unit; and
a vibration generation unit configured to notify the incoming call by vibration if the ringtone is silenced by the ringtone silencing unit.

11. A communication terminal apparatus comprising:
a ringtone output unit configured to output a ringtone if an incoming call is received and notifying the incoming call;
a ringtone silencing unit configured to silence the ringtone output by the ringtone output unit; and
a volume adjustment accepting unit configured to accept a volume adjustment of the ringtone if the ringtone is output by the ringtone output unit and accepting a volume adjustment of a received voice if the ringtone is silenced by the ringtone silencing unit.
